# EUROPEAN PATENT APPLICATION

(11) **EP 1 282 212 A2**
(43) Date of publication of application: **05.02.2003**
(21) Application number: 02394083.6
(22) Date of filing: 31.07.2002
(51) Int. Cl.: H02J 7/00

(54) **A battery charging device**

(30) Priority: 02.08.2001 IE 20010736
(71) Applicant: The Haehnel Partnership, Sundays Well, Cork (IE)
(72) Inventor: Haehnel, Michael, Carrigaline, County Cork (IE); Haehnel, Christian, Monkstown, County Cork (IE)
(74) Representative: Weldon, Michael James

(57) **Abstract**

A battery charging device (1) has charging terminals (4) in a seat (5) for a battery (B). The seat (5) is in a seat module which may be replaced by a module for a different battery type. Also, the seat module has a hinged extension piece (71) which allows it to be used with different batteries, depending on the position of the extension piece. The terminals (4) are protected by a cover (10) which pivots between a covering position protecting the terminals and a supporting position after rotation to a rearward stable position.

## Description

### INTRODUCTION

### Field of the Invention

The invention relates to battery charging devices.

### Prior Art Discussion

It is known to provide such a device comprising a housing having a seat and charging contacts. A rechargeable battery is inserted into the seat for recharging. One such charging device comprises a hinged cover plate for protection of charging terminals.

While such a device is quite useful and convenient, there is a need for a device with improved compactness and versatility.

The invention is directed towards providing such a device.

### SUMMARY OF THE INVENTION

According to the invention, there is provided a charging device comprising a housing, a seat with charging contacts, and a cover for the contacts, characterised in that the cover is movable between a position covering the seat to protect the contacts and a supporting position providing support for the device while in use.

In one embodiment, the cover is rotatable about a hinge between the covering and supporting positions.

In a further embodiment, the seat and the cover are of generally curved rectangular shape.

In one embodiment, the hinge comprises mutually resilient male and female connectors for snap-fitting engagement in the covering and supporting positions.

In another embodiment, a connector is on a resilient wall between arcuate slots, the resilient wall being integral with the cover or the housing at both circumferential ends.

In a further embodiment, the slots are co-centric.

In one embodiment, the hinge comprises a hinge pin having a head in contact with a surface of the cover or the housing to provide counter-pressure to a connector.

In another embodiment, the device further comprises a movable seat extension piece comprising means for moving to a position at which it extends size of the seat to accommodate and hold a relatively large battery.

In a further embodiment, the extension piece comprises means for pressing a battery against the contacts and holding it in position.

In one embodiment, the pressing means comprises a lip for engagement with a top side edge of a battery, and the contacts are resiliently mounted.

In another embodiment, the extension piece comprises means for rotating between inoperative and extended positions.

In a further embodiment, the seat comprises a modular replaceable seat module inserted in a cavity of the housing.

In one embodiment, the seat module comprises means for snap-fitting into the cavity.

The invention also provides a charging device kit comprising a charging device as defined above and at least one additional seat module comprising means for charging a different battery.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a perspective view from above of a charging device of the invention in a closed position;
Fig. 2 is a perspective view showing the device in an open position;
Fig. 3 is an exploded perspective view showing the device in an open position;
Figs. 4 and 5 are perspective views showing a hinge in more detail;
Figs. 6 and 7 are perspective views of battery seat modules; and
Figs. 8, 9, 10, and 11 are perspective views showing further seat modules.

### Description of the Embodiments

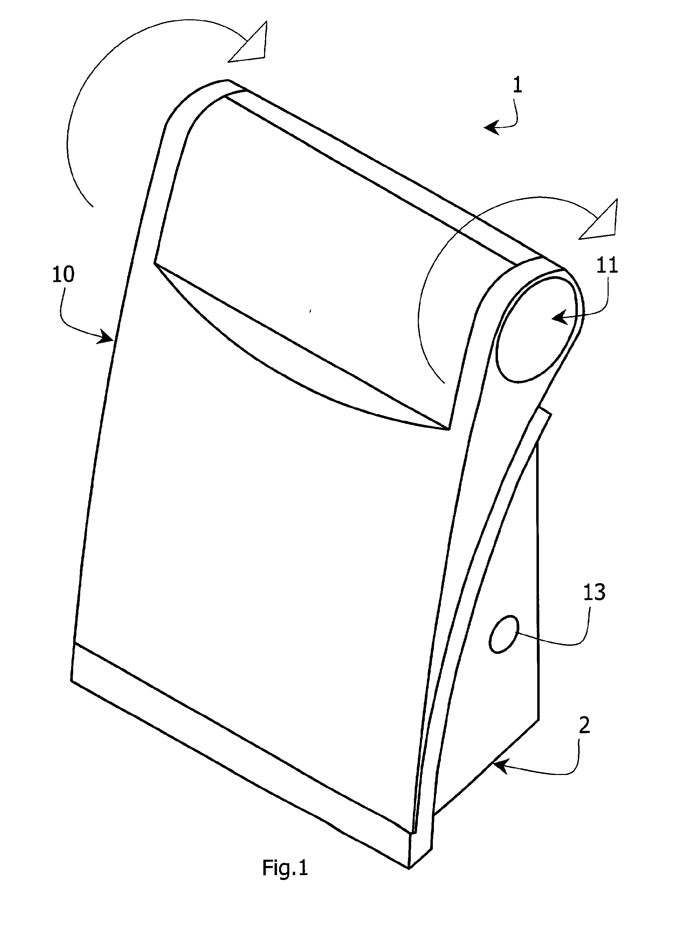

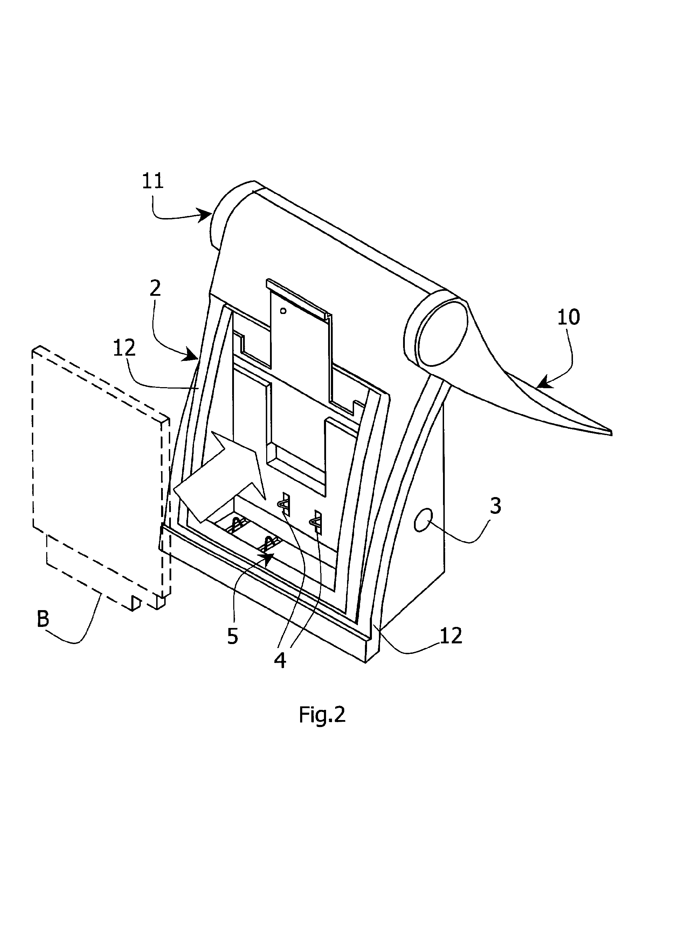

Referring to Figs. 1 and 2 there is shown a charging device 1. The device 1 comprises a housing 2 having a flat base for free-standing use. An electrical socket 3 is connected to a charging circuit (not shown) inside the housing 2. It is for converting 12V DC received at the socket 3 into a charging current at a pair of charging contacts 4 in a seat 5 of the housing 2. The charging circuit is conventional.

A cover 10 is rotatable about a hinge 11 between a cover position (Fig. 1) and a supporting leg position (Fig. 2). In the cover position it covers the seat 5 and hence also the contacts 4. Curved ridges 12 on each side of the housing 2 act as a rim for the cover 10. The cover 10 is stable in the cover position and so it provides protection for the contacts by preventing physical damage to them or ingress of grease or dirt.

In the leg position the cover 10 supports the device 1, providing particularly stable support when a battery is inserted in the seat 5. There is excellent stability because the cover 10 extends across the full width of the device.

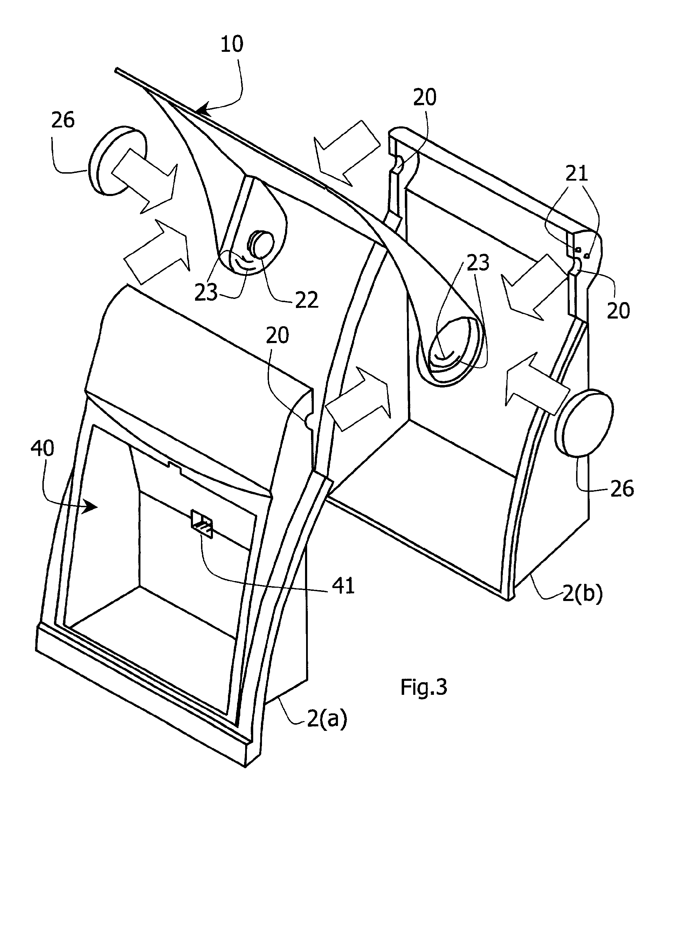

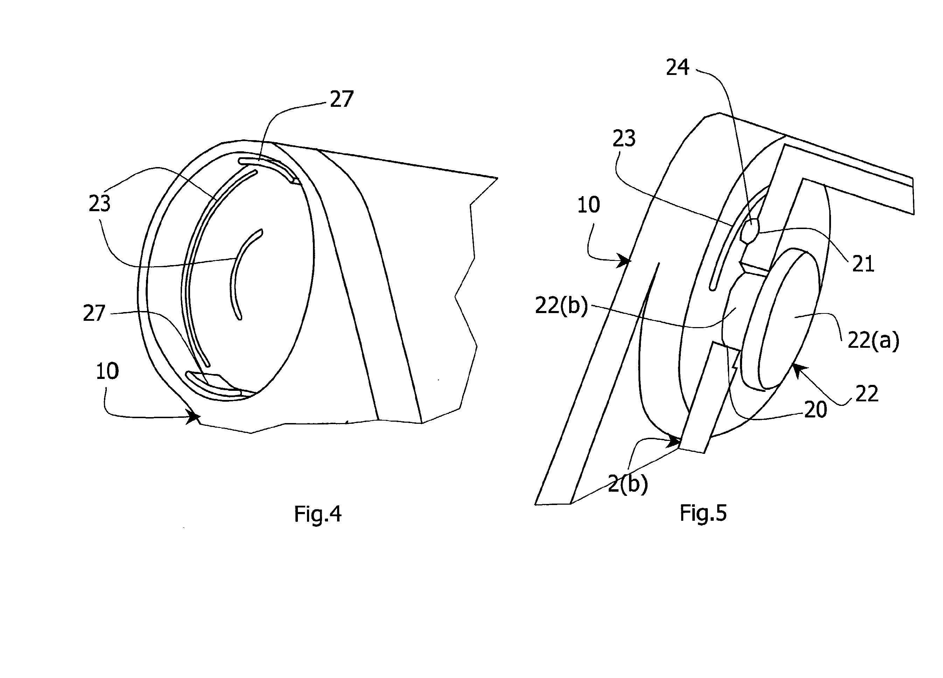

As shown in Figs. 3, 4, and 5 the hinge 11 comprises a central aperture 20 formed by mating two housing mould parts 2(a) and 2(b). There is also a pair of recesses 21 on each side located at the same radial distance from the axis of rotation. The cover 10 comprises a corresponding pin 22 for insertion into the central aperture 20 during manufacture before connection of the two mould parts 2(a) and 2(b) of the housing. The pin 22 comprises a disc-shaped head 22(a) on a shank 22(b) and the length of the pin 22 is such that the head 22(a) is in contact with the internal surface of the housing 2 behind the aperture 20.

The cover 10 also comprises a weakened resilient portion between two curved slots 23. The weakened portion has an integral curved projection 24. On the outside, the cover 10 receives a cap 26 on each side on curved ridges 27.

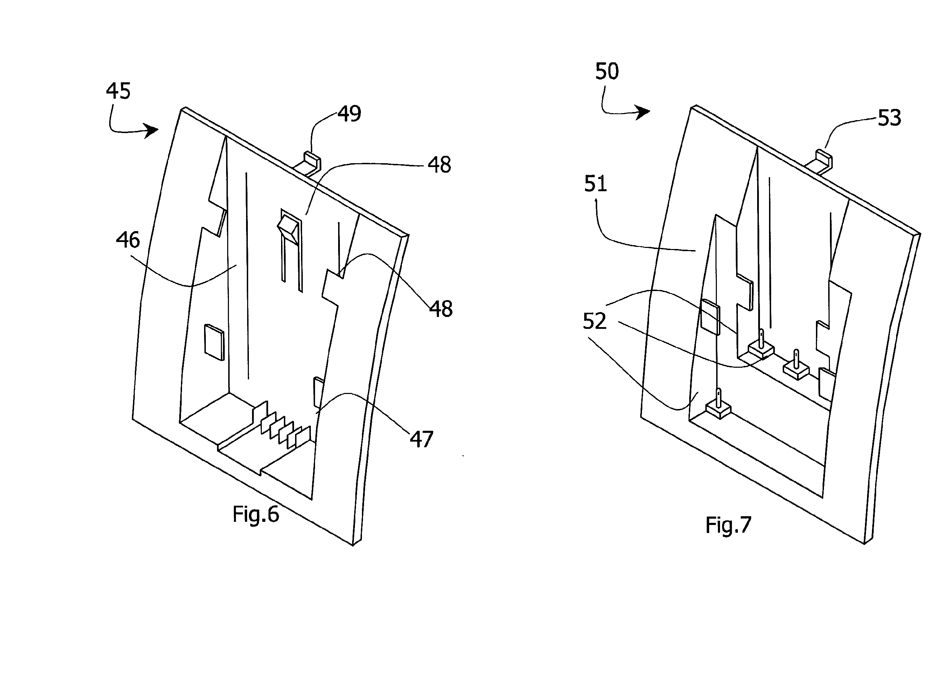

The seat 3 is formed by, during manufacture, snap-fitting a seat module into a cavity 40 of the housing mould part 2(a). The cavity 40 is of universal configuration for holding one of a wide variety of seat modules chosen during manufacture. A seat module 45 shown in Fig. 6 comprises a seat 46 having charging terminals 47 and snap-fitting battery retainers 48. It also comprises a hook 49 for snap-fitting engagement with the mould part 2(a). A module 50, shown in Fig. 7, comprises a seat 51, terminals 52, and a hook 53.

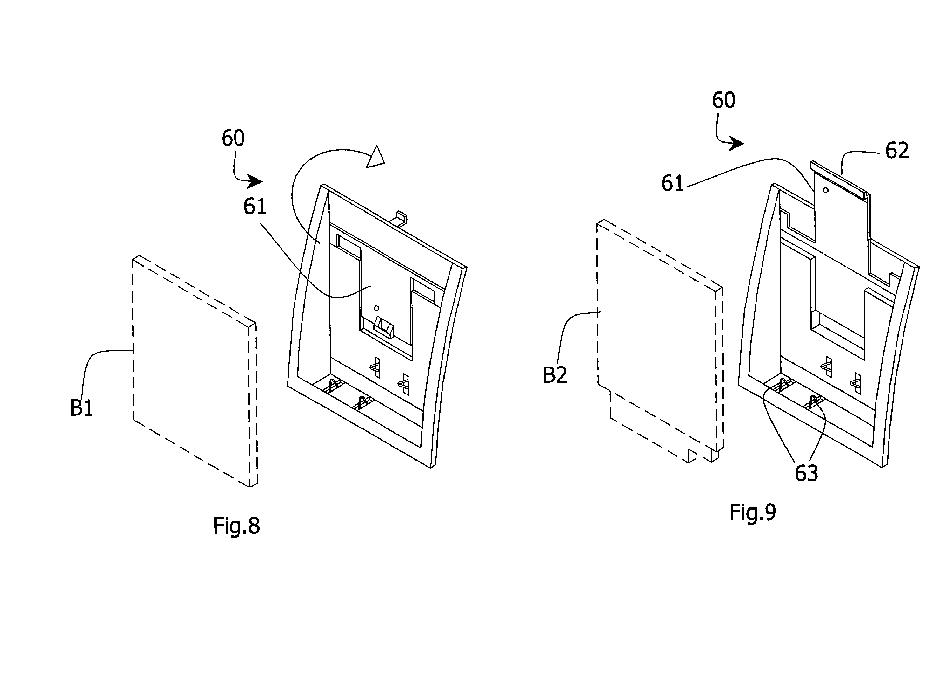

Referring to Fig. 8, a seat module 60 can accommodate a battery B1. However, it comprises a hinged extension piece 61 which can be rotated upwardly to a position shown in Fig. 9 at which it can hold a larger battery B2. The extension piece 61 comprises a lip 62 for gripping the battery B2 at its top edge. Because there is resilience in contacts 63 it effectively presses the battery B2 downwardly against the contacts. Thus, the extension piece 61 holds the battery B2 in a stable position because of snap-fitting grip of the lip 62, and also provides for good electrical contact.

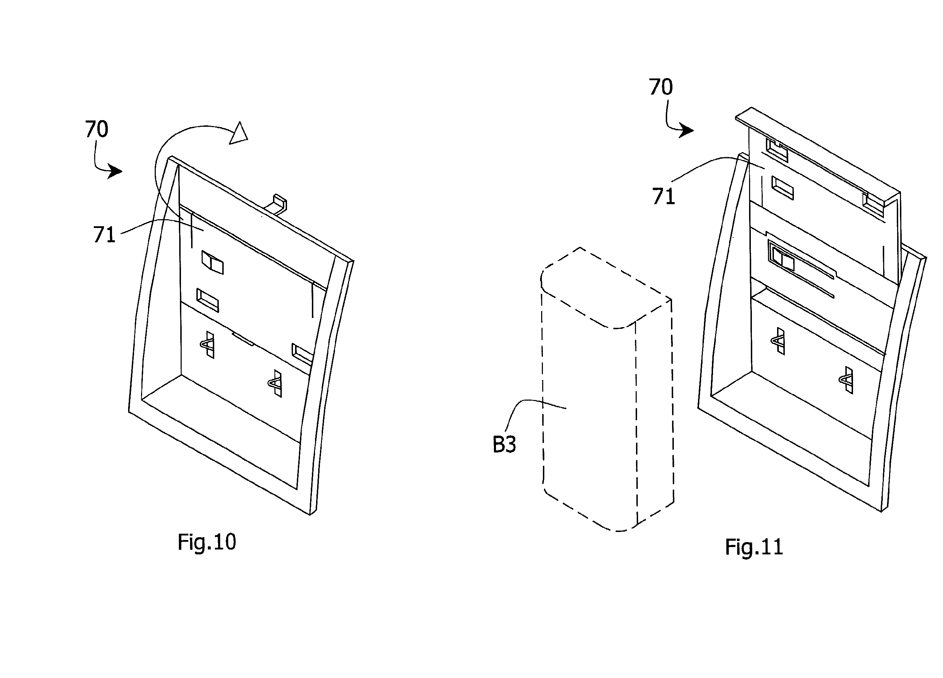

A seat module 70 shown in Fig. 10 has an extension piece 71 which allows either a small battery when in a lower position, or a large battery B3 to be accommodated as shown in Fig. 11 when in an upper position.

The charging device 1 of the invention may be supplied with a single seat module *in situ* in the cavity 40, or with a number of modules. In the latter case, the end user can easily remove one module by inserting a blade into a notch at the top of the module and prising it out of position. To insert another module the user grips an electrical plug at the end of a lead extending for the back of the new module and inserts it into a socket 41 in the cavity 40 for electrical connection of the module.

In use, the cover 10 is in the covering position when in storage. This allows the device 1 to be compact and also protects the contacts 4 from dust and other contamination, and from physical damage. For charging a battery, the cover 10 is opened in the direction of the arrows of Fig. 1 so that it provides stable support for the device 1 as shown in Fig. 2. The movement to the leg (supporting) position causes the projection 24 to exit one recess 21 and snap into the other one. Because the two slots 23 extend in a circular direction about the same centre they provide a particularly strong base for the projection 24 while also providing the required resilience. Because the weakened wall of the cover 10 between the slots 23 is integral at both ends in the circumferential direction with the cover 10, the only movement allowed is in the axial direction. Thus, there is no freedom of circumferential movement once the cover is in one of the stable positions. This helps both protection of the contacts in the covering position and stability in the supporting position.

Furthermore, integrity of the snap-fitting engagement of the projections 24 in the recesses 21 is enhanced because the pin head 2(a) provides counter-pressure to the pressure of the projection 24 against the housing around the axis aperture 20. There is thus excellent stability in both positions.

It will be appreciated that the invention provides a number of significant advantages over the prior art. The cover has the dual purposes of protecting the charging terminals and providing a stable support for an upright operative position. Also, there is excellent versatility both because one of a variety of different seat modules may be used, and because of the hinged extension pieces in at least some modules. This versatility is extremely important at present because of the ever-increasing range of different consumer appliances and associated rechargeable batteries.

The invention is not limited to the embodiments described but may be varied in construction and detail.

## Claims

1. A charging device (1) comprising a housing (2), a seat (5) with charging contacts (4), and a cover (10) for the contacts (4), **characterised in that** the cover (10) is movable between a position covering the seat (5) to protect the contacts (4) and a supporting position providing support for the device while in use.

2. A charging device as claimed in claim 1, wherein the cover (10) is rotatable about a hinge (11) between the covering and supporting positions.

3. A charging device as claimed in claim 1 or 2, wherein the seat (5) and the cover (10) are of generally curved rectangular shape.

4. A charging device as claimed in claims 2 or 3, wherein the hinge (11) comprises mutually resilient male (24) and female (21) connectors for snap-fitting engagement in the covering and supporting positions.

5. A charging device as claimed in claim 4, wherein a connector (24) is on a resilient wall between arcuate slots (23), the resilient wall being integral with the cover or the housing at both circumferential ends.

6. A charging device as claimed in claim 6, wherein the slots are co-centric.

7. A charging device as claimed in any of claims 4 to 6, wherein the hinge comprises a hinge pin (22) having a head (22(b)) in contact with a surface of the cover or the housing to provide counter-pressure to a connector.

8. A charging device as claimed in any preceding claim, wherein the device further comprises a movable seat extension piece (61, 71) comprising means for moving to a position at which it extends size of the seat to accommodate and hold a relatively large battery.

9. A charging device as claimed in claim 8, wherein the extension piece comprises means (62) for pressing a battery against the contacts and holding it in position.

10. A charging device as claimed in claim 9, wherein the pressing means comprises a lip (62) for engagement with a top side edge of a battery, and the contacts (63) are resiliently mounted.

11. A charging device as claimed in any of claims 8 to 10, wherein the extension piece comprises means for rotating between inoperative and extended positions.

12. A charging device as claimed in any preceding claim, wherein the seat comprises a modular replaceable seat module (45, 50, 60, 70) inserted in a cavity (40) of the housing.

13. A charging device as claimed in claim 12, wherein the seat module comprises means (49) for snap-fitting into the cavity.

14. A charging device kit comprising a charging device as claimed in claims 12 or 13, and at least one additional seat module comprising means for charging a different battery.
